# NEW EUROPEAN PATENT SPECIFICATION

(11) **EP 1 146 022 B2**
(45) Date of publication and mention of the opposition decision: **09.11.2016**
(45) Mention of the grant of the patent: 02.08.2006
(21) Application number: 01202177.0
(22) Date of filing: 17.10.1997
(51) Int. Cl.: C04B 18/14, C04B 28/02, C04B 26/26, C22B 7/04

(54) **Process for processing stainless steel slags**
Verfahren zur Behandlung von rostfreien Stahlschlacken
Procédé de traitement de laitiers d'acier inoxydable

(30) Priority: 17.10.1996 BE 9600883
(43) Date of publication of application: 17.10.2001
(62) Divisional of application: 97870157.1
(73) Proprietor: Trading and Recycling Company Sint Truiden, 3880 Sint Truiden (BE)
(72) Inventor: Vanschoonbeek, Daniel Joseph Louis, 3800 Sint-Truiden (BE); Celis, Serge Leon Hubert René, 2890 Gingelom (BE)
(74) Representative: Van Reet, Joseph

(56) References cited:
- EP-A- 0 542 330
- DE-A1- 4 344 006
- DE-B- 1 293 072
- FR-A- 2 666 098
- FR-A- 2 700 161
- FR-A1- 2 630 432
- US-A- 4 747 547
- US-A- 4 872 906
- CHEMICAL ABSTRACTS, vol. 97, no. 26, 27 December 1982 (1982-12-27) Columbus, Ohio, US; abstract no. 221850g, XP002032777 & JP 57 027862 B (KUBOTA LTD) 12 June 1982 (1982-06-12)
- CHEMICAL ABSTRACTS, vol. 85, no. 16, 18 October 1976 (1976-10-18) Columbus, Ohio, US; abstract no. 112186, YANA, MASAO: "Use of slag for aerated concrete manufacture" XP002054547 & JP 51 083623 A (JAPAN) 22 July 1976 (1976-07-22)
- KORTBAOUI A ET AL: "THE USE OF STAINLESS STEEL SLAG IN CONCRETE" CERAMIC TRANSACTIONS,, vol. 37, 1993, pages 77-90, XP002054546 ISSN: 1042-1122
- Brühne Zeit No. 7, Dec. 1995
- Letter of the "Commonwealth of Pennsylvania Department of Environmental Resources" dated 28.07.1993
- Abstract of "Effect of slag type on tufa precipitate formation, 1988

## Description

The present invention relates to a process for processing stainless steel slags wherein the steel slags are crushed and wherein these crushed steel slags are used to produce a shape retaining mass containing the particles of the steel slags in a bound state.

Just like the conventional, non-stainless steel slags, the slags derived from the production of stainless steel comprise mainly calcium oxide (CaO) and silicon dioxide (SiO₂). For the production of stainless steel, use is moreover additionally made of chromium. For martensitic stainless steel types, the chromium content comprises for example about 13 %, for stainless steel types of the ferritic type about 17.5 % and for austenitic stainless steel types about 17.5-18 %. Austenitic stainless steel types comprise moreover additionally about 9 to 12 % of nickel. For the production of stainless steel, use is further usually made of calcium fluoride which is added more particularly for keeping the slags fluid.

In contrast to slags of conventional steel, stainless steel slags consequently contain from an environmental-hygienical point of view problematic amounts of chromium oxide (Cr₂O₃) and possibly of nickel oxide and/or fluorides. Since these harmful substances may leach out, it was up to now appropriate, and according to some legislations even obligatory, to dump the stainless steel slags as waste under controlled conditions. The percolate water of the dumped waste had then of course to be collected and if necessary purified.

For steel slags containing chromium oxide but no nickel oxide, Chemical Abstract No. 97:221850 (JP-B-57027862) discloses crushing the slags to ≤ 10 mm and combining the crushed slags with sand, cement and water to make a concrete block forming a shape retaining mass. This Japanese patent publication, from the beginning of the 70's, treats only the possibilities for making concrete with the crushed steel slags but does not mention anything about environmental-hygienical aspects. More particularly nothing is mentioned with respect to the leaching of certain harmful substances. A drawback of the process disclosed in JP-B-57027862 is further that the free lime which is present in the crushed steel slags may start to swell under the influence of moisture so that the concrete blocks are not suited for being applied in humid conditions.

Chemical Abstract No. 85:112186 (JP-A-51083623) discloses the use of steel slags, containing in addition to chromium and other oxides also nickel oxide and calcium fluoride, for preparing aerated or light weight concrete products. Such light weight concrete products have normally a relatively low strength and are made of rather fine materials. A drawback of the use of fine steel slags is that they are quite prone to leaching, in particular of chromium, nickel and fluorides.

The invention relates now to a process for processing stainless steel slags which are the most problematic from an environmental-hygienical point of view, namely those which contain in addition to calcium oxide (CaO), silicon dioxide (SiO₂), iron oxide (Fe₂O₃) and chromium oxide (Cr₂O₃), further nickel oxide (NiO) and optionally fluorides. As a matter of fact, as it will appear hereinafter, chromium oxide and fluorides leach out in the largest quantities. Also nickel oxide leaches out, this nickel being further moreover coupled, as described hereabove, to a high chromium content.

The invention has as object to provide a new process for the processing of such stainless steel slags by which these environmental-hygienical problems can be avoided or solved and which enables to achieve a shape retaining mass of a relatively high strength and to solve the problems related to the swelling of free lime present in steel slags.

To this end, the process according to the invention is characterized by the features defined in the characterizing portion of claim 1.

Surprisingly, it has been observed that, in the shape retaining mass, the fluorides and nickel and chromium oxides which are present did not cause any problem with respect to a possible too high leaching, in addition to which the particles of the thus crushed stainless metal slags showed the required rigidity for being applied into a shape retaining mass, such as concrete, asphalt, synthetic material, cement and the like.

In view of the problems caused by the presence of free lime in the steel making slags used for producing shape retaining masses, use is made in the process according to the present invention, of stainless steel slags which contain chromium and nickel oxide in view of the fact that such stainless steel slags usually do not contain too high amounts of free lime. Moreover, the method according to the invention provides that, the crushed steel slags are brought in contact with water for a period of at least 3 weeks to ensure that their free lime content is less than or equal to 0.1 % by weight at the most.

In a preferred embodiment of the process according to the invention, the stainless steel slags are crushed in such a manner that they comprise particles larger than 10 mm, smaller particles being of course also present unless they are sieved off afterwards.

An advantage of such larger particles is that, compared to smaller particles, the components thereof are even less subjected to leaching. In the process according to the Japanese patent publications described hereabove, the steel slags are crushed on the contrary to particles having dimensions smaller than or equal to 10 mm and respectively to even much smaller dimensions.

Preferably, the stainless steel slags are crushed into particles which have a size of between 0 and x mm, where x is a value smaller or equal to 30, in particular smaller or equal to 20 mm.

In this way, a material having good, homogeneous mechanical properties is obtained. Moreover, in case of such particle sizes, it is easier to neutralise the free lime when such lime is present in too large amounts.

In a particular embodiment of the process according to the invention, the particles of the crushed steel slags are bound to one another by means of a hydraulically binding agent, in particular with cement and/or fly ash, in order to produce said shape retaining mass. In this respect, it has been observed that the crushed steel slags showed the required binding properties for being bound with cement and/or fly ash and that the fine particles of the crushed steel slags even provided an acceleration of the binding process.

In a further preferred embodiment of the process according to the invention, use is not made of an additional binding agent but the crushed steel slags are comminuted in such a manner that the crushed steel slags are at least partially composed of a fine fraction having in particular a grain size of 0-4 mm, which fine fraction is used in combination with a coarser granulate so as to form a hydraulic mixed granulate. The coarser granulate may be comprised of a coarser fraction of the crushed steel slags, formed by the same crushed steel slags or either or not sieved out of another amount of crushed steel slags, or of the usual materials for making a hydraulic mixed granulate such as Maas gravel (= river gravel), grès stone (= sandstone) or crushed lime stone, rubble, and the like.

According to the invention, the crushed steel slags can be ground further, in particular a fine fraction of for example 0-4 mm sieved out of these crushed steel slags, and this into a powder having a particle size analogous to that of cement and which can be used, due to the observed hydraulic properties, as additive in the preparation of cement.

Other advantages and particularities of the invention will become apparent from the following description of some particular embodiments of the process according to the invention and the crushed stainless steel slags which are obtained thereby. This description is only given by way of example and is not intended to limit the scope of the invention.

So, the invention generally relates to a process for processing slags which are produced in the production of stainless steel.

The production of stainless steel is usually done in three steps in each of which slags are produced. These are for example electric furnace slags, converters slags and VOD-final slags (VOD = Vacuum Oxidising Decarburation), in amounts of for example respectively about 8 % by weight, 14 % by weight and 3 % by weight, about 5 % by weight of rubble being further typically discarded. In each of these cases, the slag is composed on the basis of burned lime (CaO). This lime forms a molten protective layer onto the bath and thus protects the hot steel against oxidation. The lime moreover absorbs oxides and impurities so that a mixture of CaO and metal oxides (of transition metals) is produced. In the last phase, the non-refractory oxides are reduced with metallic Si, so that mainly a mixture of 2CaO.SiO₂ with small amounts of inert oxides and a little sulphur and/or phosphorus is produced. In order to make the reduction reaction to go on smoothly, fluor spar (CaF₂) is added which makes the slag liquid. A typical analysis of the produced slags is as follows :

| | |
|---|---|
| CaO | 40-60 % |
| SiO₂ | 20-30 % |
| MgO | ± 10 % |
| Fe₂O₃ | ± 2 % |
| MnO | ± 1 % |
| S | traces |
| F- | some % |
| Cr₂O₃ | 1 to 10 % |
| Ni0 | <1 % % |

From analyses it appeared that the slags produced during the different steps have a similar composition.

The electric furnace slag, which is produced on the electric melting furnace for stainless steel, comprises more particularly mainly CaO, MgO and SiO₂. In addition, it contains elements which are produced by oxidation of the elements which are present in the scrap iron, namely FeO, Cr₂O₃, NiO and Al₂O₃. Further, small amounts of impurities may also be present such as ZnO, PbO, TiO₂ and CuO.

The converter slag is formed during the refining of the stainless steel melt by blowing in oxygen, the carbon content being reduced by means of this oxygen from at the most 2.5 % to about 0.3 %. In principle, it has the same composition as the electric furnace slag. Due to the better reduction, the content of non-ferro alloy elements is however substantially lower.

The VOD-final slag is obtained by refining (oxygen blowing) under vacuum resulting in a further reduction of the carbon content, more particularly to about 0.05 %. Due to the even better reduction as converter slag, this slag quasi does not contain any non-ferro-elements anymore. The total Cr content in the electric furnace slag has been observed to be significantly higher than this in the VOD and the converter slag.

In practice, the mixed stainless steel slags are crushed by means of pincers and hydraulic breaking hammers on machines or cranes into bits and pieces having sizes which may vary from 0 up to 2000 mm at the most. The metallic metal pieces which are present in the thus crushed steel slags are removed manually. The recycled metallic material, which is sufficiently pure, is taken up back into the production.

According to the invention, the roughly broken steel slags, from which the largest metallic metal pieces have preferably already been removed, are further crushed to a particle size which is mainly smaller than about 60 mm at the most, which can be done in one or more steps, in other words crushing processes. It will be clear that after the applied crushing processes, most of the particles may meet the required particle size but that there will always remain an amount of larger particles which may however be sieved off and possible be crushed again. As it will be described further hereinafter, the mass of stainless steel slags does not have to be crushed as such but it is possible to remove larger fragments in advance therefrom, in particular by sieving.

For crushing the rough steel slag pieces, use can be made of various breaker types such as percussion breakers, hammer breakers, conical and rotary crushers and jaw crushers, preference being clearly given, at least in a first phase, to a jaw crusher provided with an antiblocking system in view of the high efficiency which can be reached therewith and since this crusher is the most resistant against the hard material. This jaw crusher is preferably applied to comminute the steel slags to fragments of up to for example 300 mm at the most. This does not alter the fact that - except for the problems of possible hammer breaking - a percussion or hammer breaker achieves a same efficiency and produces even qualitatively more and better suited product, in other words a better grain formation (cube), and enables even to achieve directly the desired particle size of from 0 to about 60 mm. Possibly, the excess above 60 mm will be further crushed after sieving until the entire mass has been reduced to a particle size of up to about 60 mm at the most.

For the final comminution to a particle size of about 60 mm at the most, the same breaker types can be used but in this case preference is clearly given to the use of a percussion breaker. According to the invention, it has indeed been found that by means of a percussion breaker the metal rests (about 1 to 20 % of the crushed steel slags) which are still present are moreover freed by the percussion a.o. from the lime stone and that by means of this type of breaker a better cubicity of the particles can be assured which assures more efficient application possibilities.

After having crushed the steel slags, they can be separated for example by one or more sieving operations into different fractions, in addition to which it is for example possible to crush the largest fraction or "oversize" again. Such a sieving operation can therefore already be applied before the desired particle size is achieved.

After having crushed the steel slags, still further metal rests are preferably also removed therefrom, in other words recycled, destined as raw material a.o. for the production of new stainless steel. This can be done visually and manually and/or by automatic and/or mechanical systems. Use can for example be made of magnetic separation systems and this in function of the crushed fraction which is to be treated and which can be obtained in particular by one or more sieving operations. For the coarser fractions, use is preferably made of a top belt magnet, for the finer fractions a head roller magnet and for the fractions of for example 0 to 7 mm a tube magnet. Besides magnetic separation systems, use can also be made for the non-magnetic metal fractions, including nickel and chromium, of induction current systems, i.e. Foucault or E. Current systems, with a top belt, head roller, or further "tube" installation and also sieving systems, preferably dry sieving systems, in order to avoid polluted waste water, based on gravity and/or air and vibration system separations.

The use of these separation systems enables to recycle on average 1 to 20 % of steel fragments from the crudely crushed material and to use these again in the basic stainless steel production process. It is clear that the amount of slags is reduced hereby whilst the metallic parts can be taken up again as a valuable raw material for making stainless steel, and the remaining matter, as will be described further hereinafter according to the invention, as stone granulate and/or cement aggregate (= to be used as raw material for cement).

Due to the fact that the slags are crushed more finely according to the invention, a larger surface of these slags is exposed so that there is a greater risk for leaching of harmful substances, in particular of Cr₂O₃, NiO and F⁻. In order to avoid this, the particles of the crushed slags are bound according to the invention with one another to produce a shape retaining mass containing the particles of the crushed steel slags in a bound state. To this end, use is made of a hardenable matrix which can be based more particularly on a hydraulically binding agent such as cement, fly ash and/or a fine fraction of the crushed steel slags, asphalt and/or synthetic material, for example thermoplastic waste plastic. In general, the crushed slags are used according to the invention in so-called moulded applications in order to neutralise the baleful leaching behaviour of the comminuted fragments.

A preferred embodiment of the process according to the invention consists in that use is made as hydraulically binding agent of cement. This cement can for example be used to bind a fine fraction of the crushed slags, having a particular size of for example 0 to 3-4 or 5 mm, to form a stabilisation layer which hardens by the uptake of moisture from the bottom or by moistening with water. Additionally, a coarser fraction of the crushed slags can also be applied, possibly in combination with sand instead of with said fine fraction. By the addition of water and the required amount of cement, in combination with natural and/or stainless steel sand, it is moreover possible to make concrete from the crushed slags. Of course, use can then also be made of the usual raw materials of concrete such as sand (both natural and synthetic sand originating from industrial processes, for example Metamis® and pyrite) and (Maas)gravel or crushed lime stone and the like. According to the invention, the crushed steel slags offer thus a valuable alternative raw material for replacing these materials, and this of course depending on the particle size of the employed fraction. This goes both for the production of concrete and for the production of asphalt (inclusive filler) or of plastic bound materials, or further for the preparation as aggregate in concrete, building and pointing mortars.

According to the invention, it has more particularly been found that the crushed steel slags, and especially the coarser fraction thereof, had excellent mechanical properties a.o. as to hardness (PTV-road metal class S1; PTV = Prescriptions Techniques - Technische Voorschriften) and that they had a fairly cubic or round shape and are thereby, in contrast to other, more flat materials such as for example "grès-road metal material", very suited for being used in particular in concrete or asphalt, all the more in view of their equilibrated grain composition. The hardness as well as the cubic grain shape result in that the material is particularly suited for example for top and/or metalling layers in road construction. From tests it appeared that, based on the crushed steel slags, concrete can be made, the specific weight of which is somewhat higher than the specific weight of a same concrete on the basis of gravel, namely about 2500 kg/m³ instead of about 2350 kg/m³, but the compression strength of which can be about 1.5 times higher. Binding experiments on cement, wherein wash water of the steel slags and conventional water were used, have shown that the material originating from the steel slags provide for an accelerated binding. Consequently, the crushed steel slags show themselves also intrinsic hydraulically binding properties.

Hence, according to the invention, it is possible to use the fine fraction of the crushed steel slags, having for example a grain size of 0 to 4 mm, in combination with a coarser granulate so as to compose a hydraulic mixed granulate which hardens when coming into contact with water and when being preferably compacted. In other words, this fine fraction can thus be used as cement aggregate. The coarser granulate can be formed by the coarser fraction of the crushed steel slags and/or by another granulate such as gravel, crushed lime stone, concrete and stone rubble, etc. From environmental hygienical considerations, preference has to be given to the use of a combination of the slag granulate with the crushed stone material because in this way the leaching is further reduced, in particular the leaching of fluorides. Crushed stone rubble may for example be mixed with 5 to 20 % of stainless steel slags crushed to a same or a smaller particle size. The hydraulic mixed granulate can be obtained automatically when crushing the steel slags sufficiently finely or can be composed by means of fractions previously sieved off. It can be applied for example as a stabilisation layer underneath roads or the like, in which case it is of course compacted and brought into contact with water or moisture so as to form the shape retaining hard mass wherein the harmful elements are bound. Whether with or without an additional binding agent, such as cement, fly ash, asphalt or plastic, a sufficient hardness can be obtained in this way, in particular a hardness of for example at least 2 MPa.

As already discussed hereinabove, the stainless steel slags are crushed according to the invention to a particle size of about 60 mm at the most. In this way, a quite homogeneous mixture is obtained, the particles or pebbles of which are quite identical and have for example a substantially identical hardness and porosity. When crushing, in particular with the percussion breaker, it has indeed been observed that the more porous or less hard particles are broken more finely, possibly even into sand, so that the larger particles had more homogeneous properties. This effect is even still more pronounced if the steel slags are crushed to a particle size of about 30 mm, most preferred being the case wherein the steel slags are crushed to a particle size of about 0 to 20 mm at the most. From the so-crushed steel slags, the required fractions can then be sieved off in function of the bound application modalities or mixed granulate possibilities.

Crushing the stainless steel slags is not only important to obtain a material having good, homogeneous mechanical properties, but is also important to enable, when the steel slags contain a too large amount of free lime, to neutralise this lime to a sufficient extent with water. It has indeed been observed that this free lime may later, after a long exposure to moisture, start to swell and thus cause deformations for example in a concrete road surface wherein the crushed steel slags have been applied. Although the amount of free lime which is present can vary to a considerable extent, this is much less the case with stainless steel slags according to the invention than with the conventional steel or iron slags, which are hereby not directly and immediately suited for being employed as alternative raw material in concrete products, and the crushed steel slags are according to the invention to be subjected to an ageing process for at least 3 weeks, for example for one month, during which process the crushed steel slags are brought into contact with water in order to neutralise the free lime to a maximum. To this end, the crushed steel slags can be sprayed with water or may possibly be stored in a water bath. The ageing period is preferably adjusted in function of the observed amount of free lime. The crushed steel slags are allowed to age until the content of free lime comprises up to 0.1 % by weight at the most. In view of the neutralisation of the free lime, use is preferably to be made for the production of concrete of a finer fraction of the crushed steel slags, for example a 0-40 fraction which has been sieved off out of these crushed steel stags,

According to the invention, it is also possible to grind at least a portion of the crushed steel slags, for example a fine fraction thereof, still further into a powder. The thus ground steel slags can then be employed due to their hydraulic properties as hydraulically binding agent and can in particular be mixed for example into cement to form a (composite) cement. Also in this application, the stainless steel slags which are ground in this case will arrive in a shape retaining mass wherein the harmful substances are sufficiently protected against leaching.

Finally, the possibility is offered according to the invention to remove larger fragments from the partially crushed stainless steel slags, more particularly by sieving, since it has been found that the harmful substances which are present are also better protected against leaching in these larger fragments. To this end, these larger fragments have preferably a diameter larger than at least 60 mm. It will be clear that the larger the diameter, the less leaching will occur. The larger fragments are preferably removed from these stainless steel slags which contain the smallest amount of harmful substances, preference being more particularly given to the converter slags or possibly to the VOD-slags having however a somewhat higher nickel content. The electric furnace slags on the contrary are less appropriate in view of their considerably higher chromium content. The removed larger fragments can be used as monolithic rock for building and/or reinforcement works, applications in water being in particular taken into consideration, for example applications as bank or dike reinforcement or as basis for piers of bridges and the like. In this application, the stones are kept normally together in steel nets.

When all fragments having a diameter larger than 60 mm are previously removed, it is still important according to the invention for the moulded applications of the remaining smaller fractions of the stainless steel slags to subject these to a crushing process because, as described hereinabove, the properties of the particles become more homogeneous thereby and are of a better quality for being applied for example in concrete or the like.

In summary, the crushed stainless steel slags can be used according to the invention in all kinds of moulded applications wherein the particles of the crushed steel slags are embedded in a hardenable matrix so that the harmful elements do no longer raise problems as to leaching. The hardenable matrix can be formed by means of plastic, asphalt or a hydraulically binding agent such as cement, fly ash or the fine fraction of the crushed steel slags itself. The crushed steel slags, or certain fractions thereof, are preferably applied in concrete, more particularly in cast concrete and/or in other moulded concrete products, such as concrete or cement stones, concrete slabs or posts, kerbstones, etc., as well as in cement, concrete, pointing and building mortars.

### Examples 1 to 10

A mixture of the hereabove described stainless steel slag types was crushed to a particle size of 0 to about 18 mm. The crushed steel slags were subsequently separated by means of a sieve in a fine fraction of 0-4 mm and a coarser fraction of 4-18 mm. These fractions were used to partially replace limestone (10/20) en sand (0/5) in the production of concrete kerbstones. The concrete compositions applied in examples 1 to 10 are indicated in Table 1 below.

**Table 1 : Concrete composition of examples 1 to 5 and comparative examples 6 to 10**

| | Examples 1-5 | Comparative examples 6 - 10 |
|---|---|---|
| Limestone 10/20 | 100 kg | 400 kg |
| Steel slags 4/18 | 300 kg | - |
| Sea sand 0/2 | 700 kg | 700 kg |
| Sand 0/5 | 600 kg | 800 kg |
| Steel slags 0/4 | 200 kg | - |
| Limestone 2/10 | 700 kg | 700 kg |
| Fly ashes | 90 kg | 90 kg |
| Cement I 52.5 R | 335 kg | 335 kg |
| Additives ng 30 | 1.2 l | 1.2 l1 |

Pressing of the concrete kerbstones of type II D 1 with dimensions 1 m x 30 cm x 40 cm on a Henke press went in all examples without problems. After seven days bending tests were performed, wherein for examples 1 to 5 bending strengths (in mPa) of 6.17 ; 6.01 ; 6.34 ; 5.21 and 5.75 respectively were measured and for the comparative examples 5.76 ; 5.63 ; 6.12 ; 5.82 and 5.98. At the same time, the water absorption after 8 days of immersion in water was determined. The measured water absorption varied in examples 1 to 5 between 3.9 and 4.5 % by weight and in comparative examples 6 to 10 between 3.7 and 4.2 % by weight.

As general conclusion it can be said that the use of the crushed steel slags does not have a significant influence on the strength of the final product nor on the water absorption thereof and that they put themselves forward as a valuable substitute granulate and/or material.

### Leaching tests

### Crushed stainless steel slags

Before examining the leaching behaviour of crushed stainless steel slags in so-called moulded building materials, the leaching behaviour of the crushed steel slags were examined as such, more particularly according to the instructions provided by Art. 109 of the Belgian Vlarem II legislation.

A mixture of the three types of stainless steel slags were crushed thereto to a particle size of 0-20 mm, from which the 4-7 mm fraction was subsequently sieved off. This fraction was placed in a column which was continuously washed through with water acidified by means of nitric acid to a pH of 4. The total amount of water used comprised 10-times the weight of the slag in the column. The flow rate of the water was adjusted in such a manner that this test took about 21 days. The different parameters as shown in the Table 1 below were measured in the percolate.

**TABLE I**

| Leaching behaviour of crushed mixture of stainless steel slags | |
|---|---|
| Analysis parameter | |
| Arsenic (mg/l) | < 5 |
| Cadmium (mg/l) | < 0.4 |
| Chromium (mg/l) | 72 |
| Copper (mg/l) | < 3 |
| Lead (mg/l) | < 2 |
| Nickel (mg/l) | < 3 |
| Zinc (mg/l) | <10 |
| Conductivity (mS/cm) | 820 |
| pH | 11.6 |
| Chloride (mg/l) | < 4 |
| Fluoride (mg/l) | 3.3 |

From this table it appears that especially chromium and fluoride cause problems as to leaching, which has been confirmed in other tests, namely in tests in conformity with the procedure developed by CEN/TC292/WG2 (European compliance test for granular waste) which is a two-step leaching test, more particularly a modified DIN 38414-S4 test. From these latter tests it appeared, for another sample of crushed stainless steel slags, that the leachability was for chromium on average 2.2 mg/kg and for fluoride 90 mg/kg whilst the leachability of nickel was lower than 0.24 mg/kg. Consequently, especially chromium and fluoride cause problems as to leachability.

### Crushed stainless steel slags in moulded state

As shown in Table II below, the tests were performed on three different concrete mixtures.

| | Ref.Mixture | Mixture I | Mixture II |
|---|---|---|---|
| Cement CEM I 42.5 R | 320 kg | 320 kg | 320 kg |
| Crushed Gravel 4/7 | 1400 kg | 935 kg | 465 kg |
| Crushed steel slags 4/7 | - | 465 kg | 935 kg |
| Sand 0/3 | 500 kg | 500 kg | 500 kg |
| Water | 173 l | 173 l | 173 l |

In this case, the diffusion test according to the Dutch Draft Standard NEN 7345 (1992) was applied, wherein a sample of each concrete mixture was immersed at a temperature of 18-22°C in an amount of extraction liquid (equal to 5 x the concrete volume) consisting of demineralized water acidified by means of nitric acid to pH 4.0. This extraction liquid has been changed and analysed after increasing time intervals. Changes were done according to points in time as mentioned in Tables III-V, wherein the analysis results are also indicated. The concentration in the extraction liquid has been converted into the amount of leached element per m², and this on the basis of the surface of the samples (ref. mixture : 0.056 m²; mixture I : 0.062 m²; mixture II : 0.058 m²). The elements As, Cd, Cu, Cr, Pb, Ni and Zn were determined by ICP-AES, the chloride content by microcoulometry and the fluoride content by means of an ion selective electrode.

**Table III : Results of the leaching test on the reference concrete mixture**

| Point in time (days) cumulative | | 0.25 | 1 | 2.25 | 4 | 9 | 16 | 36 | 64 |
|---|---|---|---|---|---|---|---|---|---|
| Analysis parameter | unit | | | | | | | | |
| Arsenicum | mg/m² | < 0.37 | | | | | | | <0.37 |
| Cadmium | mg/m² | < 0.03 | | | | | | | < 0.03 |
| Chromium | mg/m² | 0.37 | | | | | | | 0.44 |
| Copper | mg/m² | < 0.22 | | | | | | | < 0.22 |
| Lead | mg/m² | < 0.15 | | | | | | | < 0.15 |
| Nickel | mg/m² | < 0.22 | | | | | | | < 0.22 |
| Zinc | mg/m² | <0.73 | | | | | | | < 0.73 |
| Conductivity | µS/cm | 240 | | | | | | | 72 |
| pH | | 10.8 | | | | | | | 10.5 |
| Chloride: | mg/m² | <293 | | | | | | | < 293 |
| Fluoride | mg/m² | 14.7 | | | | | | | 7.3 |

**Table IV : Results of the leaching test on concrete mixture I**

| Point in time (days) cumulative | | 0.25 | 1 | 2.25 | 4 | 9 | 16 | 36 | 64 | Total |
|---|---|---|---|---|---|---|---|---|---|---|
| Analysis parameter | Unit | | | | | | | | | |
| Arsenicum | mg/m² | <0.38 | <0.38 | <0.38 | <0.38 | <0.38 | <0.38 | <0.38 | <0.38 | <3.06 |
| Cadmium | mg/m² | < 0.03 | < 0.03 | < 0.03 | < 0.03 | < 0.03 | < 0.03 | < 0.03 | < 0.03 | < 0.24 |
| Chromium | mg/m² | 0.61 | < 0.23 | < 0.23 | < 0.23 | < 0.23 | 0.38 | 0.31 | 0.31 | < 2.53 |
| Copper | mg/m ² | < 0.23 | < 0.23 | < 0.23 | < 0.23 | < 0.23 | < 0.23 | < 0.23 | < 0.23 | <1.84 |
| Lead | mg/m² | <0.15 | <0.15 | 0.38 | 0.31 | < 0.15 | <0.15 | < 0.15 | < 0.15 | <1.59 |
| Nickel | mg/m² | <0.23 | <0.23 | < 0.23 | < 0.23 | < 0.23 | < 0.23 | < 0.23 | < 0.23 | < 1.84 |
| Zinc | mg/m² | < 0.77 | < 0.77 | 0.84 | < 0.77 | 0.77 | < 0.77 | < 0.77 | <0.77 | < 6.23 |
| Conductivity | µS/cm | 230 | 50 | 70 | 90 | 90 | 220 | 100 | 460 | |
| pH | | 11.1 | 10.5 | 10.6 | 10.7 | 10.8 | 11.1 | 10.3 | 11.6 | |
| Chloride | mg/m² | 307 | <307 | <307 | <307 | <307 | 307 | 307 | <307 | <245.6 |
| Fluoride | mg/m² | <7.7 | <7.7 | <7.7 | 7.7 | <7.7 | 15.3 | 15.3 | 15.3 | < 84.4 |

**Tabel V : Results of the leaching test on concrete mixture II**

| Point in time (days) cumulative | | 0.25 | 1 | 2.25 | 4 | 9 | 16 | 36 | 64 | Total |
|---|---|---|---|---|---|---|---|---|---|---|
| Analysis paramter | unit | | | | | | | | | |
| Arsenicum | mg/m² | <0.37 | <0.37 | <0.37 | <0.37 | <0.37 | <0.37 | <0.37 | <0.37 | <2.96 |
| Cadmium | mg/m² | <0.03 | < 0.03 | < 0.03 | < 0.03 | < 0.03 | < 0.03 | < 0.03 | < 0.03 | < 0.24 |
| Chromium | mg/m² | 0.52 | < 0.22 | <0.22 | <0.22 | 0.30 | 0.52 | 0.45 | 0.37 | <2.82 |
| Cooper | mg/m² | < 0.22 | < 0.22 | <0.22 | < 0.22 | < 0.22 | < 0.22 | < 0.22 | < 0.22 | < 1.76 |
| Lead | mg/m² | <0.15 | <0.15 | < 0.15 | 0.30 | <0.15 | <0.15 | <0.15 | <0.15 | < 1.35 |
| Nickel | mg/m² | <0.22 | < 0.22 | <0.22 | <0.22 | <0.22 | < 0.22 | < 0.22 | <0.22 | < 1.76 |
| Zinc | mg/m² | <0.75 | < 0.75 | <0.75 | <0.75 | <0.75 | < 0.75 | < 0.75 | <0.75 | <6 |
| Conductivity | µS/cm | 220 | 70 | 150 | 100 | 180 | 100 | 120 | 210 | |
| pH | | 11 | 10.6 | 10.9 | 10.8 | 11.1 | 10 | 10.3 | 11.3 | |
| Chloride | mg/m² | <299 | <299 | <299 | <299 | < 299 | < 299 | 598 | < 299 | <2691 |
| fluoride | mg/m² | 22.4 | <7.5 | 7.5. | <7.5 | <7.5 | 7.5 | 14.9 | 14.9 | < 89.7 |

From the results it can be deduced that, except for fluoride, no measurable leaching has taken place compared to the reference mixture. The fluoride leaching is however so small that it does not cause problems from an environmental-hygienical point of view.

### Binding tests

This test was also done starting from a mixture of crushed steel slags which have been passed along a powerful magnet and from which the non-magnetic fragment of 4-16 mm has been sieved off.

The test has been performed on the basis of the Dutch Draft Standard
- NEN 5944: :Additive materials for concrete. Determination of the influence of extract of additive material on the time of binding
including
- EN 196-3: :Determination of the normal consistence on the reference (2x)
- EN196-3: :Determination of the time of binding (2x on extract and reference en on 2 cement types)

The NEN 5944 standard describes the method for determining the influence on the time of binding by the extract of additive material for concrete, namely the slags.

Herefor, the binding of the cement with the extract of the additive material is compared to the binding of cement with normal production water, in this case tap water. The extract of the additive material is obtained by bringing the sample of slags for 3 hours in contact with the production water and by removing the extract afterwards by filtration. The cement type may have an influence on the determination.

A cement slurry of normalised consistency has a certain resistance against the penetration of a normalised probe of 300 g with the Vicat apparatus. The procedure has to be carried out at about 20°C and a relative humidity of at least 65 %. The amount of water necessary to achieve this resistance is determined by making measurements on cement pastes having different moisture contents.

The determination of the binding time according to EN 196-3 is done with a normalised needle of 300 g with the Vicat apparatus. The procedure has to be carried out at about 20°C and a relative humidity of at least 90 %.

The determination of the binding time is carried out on cement pastes with an amount of water equal to the cement paste with production water of normalised consistency. The beginning of the binding is the moment that the needle remains stuck at 4 mm from the bottom of the 40 mm thick cement slurry, the binding being considered to be terminated the moment the needle does no longer penetrate in the cement slurry (penetration <0.5 mm).

The test is carried out twice with two cements
CEM 42.5 R (Portland cement)
CEM II/B-M 32.5 (Portland composite cement with fly ash).

The normalised consistency of the reference cement was determined with tap water.

| | | |
|---|---|---|
| CEM I 42.5 R | 500 g | 133.5 g water |
| CEM II/B-M 32.5 | 500 g | 132.0 g water |

The test results are shown in Table VI below.

**Tabel VI : Results of the binding test**

| minutes | 150 | 165 | 180 | 195 | 210 | 225 | 240 | 255 | 270 | 285 | 300 | 315 | 330 | 345 | 360 |
|---|---|---|---|---|---|---|---|---|---|---|---|---|---|---|---|
| CEM I 42.5 R ref | | | | | | | 0.0 | 10.0 | 17.0 | 23.0 | 31.0 | 31.0 | 38.5 | | |
| CEM I 42.5 R* | | | | | 0.0 | 3.0 | 8.0 | 21.5 | 29.5 | 34.0 | 37.0 | 38.5 | | | |
| CEM II B-M 32.5 ref | | | | | | 0.0 | 3.5 | 9.0 | 11.0 | 14.0 | 16.5 | 20.0 | 29.5 | 30.0 | 34.5 |
| CEM II B-M 32.5* | | | | 0.0 | 1.5 | 1.0 | 3.5 | 9.5 | 14.0 | 16.0 | 20.5 | 22.0 | 28.5 | 31.5 | |

| | | | | | | | | | | | | | | | |
|---|---|---|---|---|---|---|---|---|---|---|---|---|---|---|---|
| ref: reference cement slury with tap water as production water. * : cement slury with extract of the stainless steel slags as production water | | | | | | | | | | | | | | | |

Since the type of cement may have an influence on the effect on the binding by the extract of the additive material, use is made of the two most common cements. Cement CEM II-B-M-32.5 comprises a certain percentage of fly ash

The binding of the cement with extract of the crushed stainless steel slags goes on uniformly and somewhat faster (for cement CEM I 42.5 R) than the binding with the reference cement. It can be concluded herefrom that the crushed stainless steel slags show hydraulically binding properties by themselves and that the finely ground slags can be used, just like fly ash, as additive for the composition of a composite cement or even as valuable hydraulically binding agent for making concrete or for making hardening layers a.o in the road construction.

## Claims

1. A process for processing steel slags containing at least calcium oxide, silicon dioxide, iron oxide and chromium oxide, wherein the steel slags are crushed into particles and wherein these crushed steel slags are used to produce a shape retaining mass containing the particles of the steel slags in a bound state, **characterized in that** use is made of stainless steel slags further containing nickel oxide and **in that**, before producing said shape retaining mass, the stainless steel slags are optionally subjected to a separation step wherein larger fragments, having a diameter larger than at least 60 mm, are removed therefrom, after this optional separation step, the stainless steel slags are crushed into particles which have a size of between 0 and x mm, where x is a value smaller than or equal to 60, the crushed steel slags are brought in contact with water, for a period of at least 3 weeks, until their free lime content comprises 0.1 % by weight or less, and the slags, which are used to produce the shape retaining mass, are embedded in a hardenable matrix to produce said shape retaining mass, in the case that all the fragments of the stainless steel slags which have a diameter larger than 60 mm would have been removed therefrom during said optional separation step, the stainless steel slags are crushed during said crushing step into particles which have a size of between 0 and x mm, where x is a value smaller than 60.

2. A process according to claim 1, **characterized in that** the stainless steel slags are crushed into particles which have a size of between 0 and x mm, where x is a value larger than 10, and the slags, which are used to produce the shape retaining mass, comprise at least a fraction of the crushed slags with particles having a size larger than 10 mm.

3. A process according to claim 1 or 2, **characterized in that** the stainless steel slags are crushed into particles which have a size of between 0 and x mm, where x is a value smaller or equal to 30, in particular smaller or equal to 20 mm.

4. A process according to any one of the claims 1 to 3, **characterized in that** said hardenable matrix is made by means of a hydraulically binding agent, in particular cement and/or fly ash.

5. A process according to claim 4, **characterized in that** concrete is prepared with the crushed steel slags, water and cement and further with sand and/or a granulate, in particular gravel or crushed limestone.

6. A process according to claim 5, **characterised in that** the stainless steel slags are comminuted in such a manner that the crushed steel slags comprise a fine fraction, which has a particle size of between 0 and 3, 4 or 5 mm, which fine fraction is used as sand to prepare said concrete.

7. A process according to any one of the claims 1 to 3, **characterized in that** the stainless steel slags are comminuted in such a manner that the crushed steel slags comprise a fine fraction, which has a particle size of between 0 and 4 mm, and a coarser fraction, which has a particle size larger than 4 mm, the fine and the coarser fraction forming a hydraulic mixed granulate which is contacted with water to form said shape retaining mass.

8. A process according to any one of the claims 1 to 3, **characterized in that** the stainless steel slags are comminuted in such a manner that the crushed steel slags are at least partially composed of a fine fraction having a grain size of 0-4 mm, which fine fraction is sieved off and mixed with a coarser granulate so as to form a hydraulic mixed granulate.

9. A process according to claim 8, **characterized in that** said coarser granulate comprises a coarser fraction of the crushed steel slags.

10. A process according to claim 8 or 9, **characterized in that** said coarser granulate comprises a stone granulate, in particular concrete and/or stone rubble, or natural raw materials such as gravel, crushed limestone and sandstone.

11. A process according to any one of the claims 1 to 3, **characterised in that** use is made of asphalt as said hardenable matrix.

12. A process according to any one of the claims 1 to 3, **characterised in that** use is made of a synthetic material, in particular of waste plastic, as said hardenable matrix.

13. A process according to claim 1, **characterized in that** at least a portion of the crushed steel slags is ground into a powdery raw material for the preparation of cement, the ground steel slags being in particular mixed with cement to produce a composite cement.

14. A process according to any one of the preceding claims, **characterized in that** the stainless steel slags are crushed to said particle size by means of a percussion breaker.

15. A process according to any one of the claims 1 to 14, **characterized in that** metallic remainders which are still present in the steel slags crushed to said particle size are recycled therefrom.

## Patentansprüche

1. Ein Verfahren zur Behandlung von Stahlschlacken, die zumindest Calciumoxid, Siliziumdioxid, Eisenoxid und Chromoxid enthalten, wobei die Stahlschlacken in Partikel gebrochen werden und wobei diese gebrochenen Stahlschlacken verwendet werden, um eine formbeständige Masse herzustellen, welche die Partikel der Stahlschlacken in einem gebundenen Zustand enthält, **dadurch gekennzeichnet, dass** rostfreie Stahlschlacken verwendet werden, die ferner Nickeloxid enthalten, und dadurch, dass die rostfreien Stahlschlacken, bevor die formbeständige Masse hergestellt wird, optional einem Separationsschritt unterzogen werden, bei dem größere Fragmente mit einem Durchmesser von mehr als mindestens 60 mm daraus entfernt werden, die rostfreien Stahlschlacken nach diesem optionalen Separationsschritt in Partikel gebrochen werden, die eine Größe zwischen 0 und x mm haben, wobei x ein Wert kleiner als oder gleich 60 ist, die gebrochenen Stahlschlacken für einen Zeitraum von mindestens 3 Wochen in Kontakt mit Wasser gebracht werden, bis ihr freier Kalkgehalt 0.1 Gewichtsprozent oder weniger beträgt, und die Schlacken, die verwendet werden, um die formbeständige Masse herzustellen, in eine härtbare Matrix eingebettet werden, um die formbeständige Masse herzustellen, wenn alle Fragmente der rostfreien Stahlschlacken mit einem Durchmesser von mehr als 60 mm während des erwähnten optionalen Separationsschrittes daraus entfernt worden sind, die rostfreien Stahlschlacken während des erwähnten optionalen Brechvorgangs in Partikel gebrochen werden, die eine Größe zwischen 0 und x mm haben, wobei x ein Wert kleiner als 60 ist.

2. Ein Verfahren nach Anspruch 1, **dadurch gekennzeichnet, dass** die rostfreien Stahlschlacken in Partikel gebrochen werden, die eine Größe von zwischen 0 und x mm haben, wobei x ein Wert größer als 10 ist, und die Schlacken, die verwendet werden, um die formbeständige Masse herzustellen, zumindest eine Fraktion der gebrochenen Schlacken mit Partikeln umfassen, die eine Größe von mehr als 10 mm haben.

3. Ein Verfahren nach Anspruch 1 oder 2, **dadurch gekennzeichnet, dass** die rostfreien Stahlschlacken in Partikel gebrochen werden, die eine Größe von zwischen 0 und x mm haben, wobei x ein Wert kleiner als oder gleich 30 ist, insbesondere kleiner als oder gleich 20 mm.

4. Ein Verfahren nach einem der Ansprüche 1 bis 3, **dadurch gekennzeichnet, dass** die erwähnte härtbare Matrix mithilfe eines hydraulisch wirkenden Bindemittels hergestellt wird, insbesondere Zement und/oder Flugasche.

5. Ein Verfahren nach Anspruch 4, **dadurch gekennzeichnet, dass** Beton mit den gebrochenen Stahlschlacken, Wasser und Zement und ferner mit Sand und/oder einem Granulat, insbesondere Kies oder gebrochenem Kalkstein, angemacht wird.

6. Ein Verfahren nach Anspruch 5, **dadurch gekennzeichnet, dass** die rostfreien Stahlschlacken so zerkleinert werden, dass die gebrochenen Stahlschlacken eine Feinfraktion umfassen, die eine Partikelgröße von zwischen 0 und 3, 4 oder 5 mm hat, wobei diese Feinfraktion als Sand verwendet wird, um den erwähnten Beton herzustellen.

7. Ein Verfahren nach einem der Ansprüche 1 bis 3, **dadurch gekennzeichnet, dass** die rostfreien Stahlschlacken so zerkleinert werden, dass die gebrochenen Stahlschlacken eine Feinfraktion umfassen, die eine Partikelgröße von zwischen 0 und 4 mm hat, und eine gröbere Fraktion, die eine Partikelgröße von mehr als 4 mm hat, wobei die feine und die gröbere Fraktion ein hydraulisches Mischgranulat bilden, das in Kontakt mit Wasser gebracht wird, um die erwähnte formbeständige Masse herzustellen.

8. Ein Verfahren nach einem der Ansprüche 1 bis 3, **dadurch gekennzeichnet, dass** die rostfreien Stahlschlacken so zerkleinert werden, dass die gebrochenen Stahlschlacken zumindest teilweise aus einer Feinfraktion mit einer Korngröße von 0 - 4 mm zusammengesetzt sind, wobei diese Feinfraktion ausgesiebt und mit einem gröberen Granulat vermengt wird, um ein hydraulisches Mischgranulat zu bilden.

9. Ein Verfahren nach Anspruch 8, **dadurch gekennzeichnet, dass** das erwähnte gröbere Granulat eine gröbere Fraktion der gebrochenen Stahl-schlacken umfasst.

10. Ein Verfahren nach Anspruch 8 oder 9, **dadurch gekennzeichnet, dass** das erwähnte gröbere Granulat ein Steingranulat umfasst, insbesondere Betonbruch und/oder Bruchstein, oder natürliche Grundstoffe wie Kies, gebrochenen Kalkstein und Sandstein.

11. Ein Verfahren nach einem der Ansprüche 1 bis 3, **dadurch gekennzeichnet, dass** Asphalt als die erwähnte härtbare Matrix verwendet wird.

12. Ein Verfahren nach einem der Ansprüche 1 bis 3, **dadurch gekennzeichnet, dass** ein synthetisches Material, insbesondere Kunststoffabfall, als die erwähnte härtbare Matrix verwendet wird.

13. Ein Verfahren nach Anspruch 1, **dadurch gekennzeichnet, dass** zumindest ein Teil der gebrochenen Stahlschlacken in einen pulverförmigen Grund-stoff für die Herstellung von Zement vermahlen wird, wobei die vermahlenen Stahlschlacken insbesondere mit Zement vermengt werden, um einen Kompositzement herzustellen.

14. Ein Verfahren nach einem der vorangegangenen Ansprüche, **dadurch gekennzeichnet, dass** die rostfreien Stahlschlacken durch einen Schlagbrecher in die erwähnte Partikelgröße gebrochen werden.

15. Ein Verfahren nach einem der Ansprüche 1 bis 14, **dadurch gekennzeichnet, dass** die Metallreste, die noch in den in die erwähnte Teilchengröße gebrochenen Stahlschlacken anwesend sind, daraus wiederverwertet werden.

## Revendications

1. Procédé de traitement de laitiers d'acier contenant au moins de l'oxyde de calcium, du dioxyde de silicium, de l'oxyde de fer et de l'oxyde de chrome, dans lequel les laitiers d'acier sont broyés pour obtenir des particules et dans lequel ces laitiers d'acier broyés sont utilisés pour produire une masse conservant une forme qui contient les particules des laitiers d'acier dans un état lié, **caractérisé en ce qu'**il est fait usage de laitiers d'acier inoxydable contenant en outre de l'oxyde de nickel et **en ce que**, avant de produire ladite masse conservant une forme, les laitiers d'acier inoxydable sont facultativement soumis à une étape de séparation dans laquelle les fragments plus gros, ayant un diamètre supérieur à au moins 60 mm, sont enlevés de ceux-ci, après cette étape de séparation facultative, les laitiers d'acier inoxydable sont broyés pour obtenir des particules qui ont une taille comprise entre 0 et x mm, où x est une valeur inférieure ou égale à 60, les laitiers d'acier broyés sont mis en contact avec de l'eau pendant une période d'au moins 3 semaines jusqu' à ce que leurs teneurs en chaux libre sont de 0.1 % en poids ou moins, et les laitiers qui sont utilisés pour produire la masse conservant une forme sont intégrés dans une matrice durcissable pour produire ladite masse conservant une forme, dans le cas où tous les fragments des laitiers d'acier inoxydable qui ont un diamètre supérieur à 60 mm auraient été enlevés de ceux-ci au cours de ladite étape de séparation facultative, les laitiers d'acier inoxydable sont broyés pendant ladite étape de broyage en particules qui ont une taille comprise entre 0 et x mm, où x est une valeur inférieure à 60.

2. Procédé selon la revendication 1, **caractérisé en ce que** les laitiers d'acier inoxydable sont broyés pour obtenir des particules qui ont une taille comprise entre 0 et x mm, où x est une valeur supérieure à 10, et les laitiers qui sont utilisés pour produire la masse conservant une forme comprend au moins une fraction des laitiers broyés avec des particules ayant une taille supérieure à 10 mm.

3. Procédé selon la revendication 1 ou 2, **caractérisé en ce que** les laitiers d'acier inoxydable sont broyés pour obtenir des particules qui ont une taille comprise entre 0 et x mm, où x est une valeur inférieure ou égale à 30, en particulier inférieure ou égale à 20 mm.

4. Procédé selon une quelconque des revendications 1 à 3, **caractérisé en ce que** ladite matrice durcissable est faite au moyen d'un agent hydrauliquement liant, en particulier du ciment et / ou des cendres volantes.

5. Procédé selon la revendication 4, **caractérisé en ce que** du béton est préparé avec les laitiers d'acier broyés, de l'eau et du ciment et en outre avec du sable et / ou un granulat, en particulier du gravier ou du calcaire broyé.

6. Procédé selon la revendication 5, **caractérisé en ce que** les laitiers d'acier inoxydable sont pulvérisés de telle sorte que les laitiers d'acier broyés comprennent une fraction de fines, qui a une taille de particule entre 0 et 3, 4 ou 5 mm, laquelle fraction de fines est utilisée comme sable pour préparer ledit béton.

7. Procédé selon une quelconque des revendications 1 à 3, **caractérisé en ce que** les laitiers d'acier inoxydable sont pulvérisés de telle sorte que les laitiers d'acier broyés comprennent une fraction de fines, qui a une taille de particule entre 0 et 4 mm, et une fraction plus grossière, qui a une taille de particule supérieure à 4 mm, la fraction des fines et la fraction plus grossière formant un granulat mélangé hydraulique qui est mis en contact avec de l'eau pour former ladite masse conservant une forme.

8. Procédé selon une quelconque des revendications 1 à 3, **caractérisé en ce que** les laitiers d'acier inoxydable sont pulvérisés de telle sorte que les laitiers d'acier broyés sont au moins composés en partie d'une fraction de fines ayant une taille de particule de 0 - 4 mm, laquelle fraction de fines est tamisée et mélangée avec un granulat plus grossier de manière à former un granulat mélangé hydraulique.

9. Procédé selon la revendication 8, **caractérisé en ce que** ledit granulat plus grossier comprend une fraction plus grossière des laitiers d'acier broyés.

10. Procédé selon la revendication 8 ou 9, **caractérisé en ce que** ledit granulat plus grossier comprend un granulat de pierre, en particulier des gravats de béton et / ou de pierre, ou des matières premières naturelles comme du gravier, de la chaux broyée et du grès.

11. Procédé selon une quelconque des revendications 1 à 3, **caractérisé en ce qu'**il est fait usage d'asphalte comme dite matrice durcissable.

12. Procédé selon une quelconque des revendications 1 à 3, **caractérisé en ce qu'**il est fait usage d'une matière synthétique, en particulier de déchets en matière plastique, comme dite matrice durcissable.

13. Procédé selon la revendication 1, **caractérisé en ce qu'**au moins une partie des laitiers d'acier inoxydable broyés est moulue en une matière première pulvérulente pour la préparation du ciment, les laitiers d'acier moulus étant mélangés en particulier avec du ciment pour produire un ciment composite.

14. Procédé selon une quelconque des revendications précédentes, **caractérisé en ce que** les laitiers d'acier inoxydables sont broyés pour obtenir ladite taille de particule au moyen d'un broyeur à percussion.

15. Procédé selon une quelconque des revendications 1 à 14, caractérisé en ce les restes métalliques qui sont encore présents dans les laitiers d'acier broyés à ladite taille de particule sont recyclés.
